# EUROPÄISCHE PATENTSCHRIFT

(11) **EP 1 276 977 B1**
(45) Veröffentlichungstag und Bekanntmachung des Hinweises auf die Patenterteilung: **04.10.2006**
(21) Anmeldenummer: 01921171.3
(22) Anmeldetag: 09.03.2001
(51) Int. Cl.: F01P 11/16, F01P 7/12

(54) **KÜHLSYSTEM EINES KRAFTFAHRZEUGS MIT EINER VERSCHLIESSEINHEIT FÜR DEN KÜHLLUFTSTROM**
COOLING SYSTEM OF A MOTOR VEHICLE COMPRISING A CLOSING UNIT FOR THE COOLING AIRFLOW
SYSTEME DE REFROIDISSEMENT D'UN VEHICULE MOTORISE COMPORTANT UNE UNITE DE FERMETURE POUR LE FLUX D'AIR DE REFROIDISSEMENT

(30) Priorität: 19.04.2000 DE 10019419
(43) Veröffentlichungstag der Anmeldung: 22.01.2003
(73) Patentinhaber: ROBERT BOSCH GMBH, 70442 Stuttgart (DE)
(72) Erfinder: RIES-MUELLER, Klaus, 74906 Bad Rappenau (DE)
(86) Internationale Anmeldenummer: PCT/DE2001/000889
(87) Internationale Veröffentlichungsnummer: WO 2001/079671

(56) Entgegenhaltungen:
- DE-A- 4 426 494
- DE-A- 19 547 667
- US-A- 4 779 577
- US-A- 5 669 311

## Beschreibung

### Stand der Technik

Die Erfindung geht aus von einem Kühlsystem eines Kraftfahrzeugs mit einer Verschließeinheit für den Kühlluftstrom zur Optimierung der Betriebsparameter des Verbrennungsmotors nach der Gattung des Hauptanspruchs. Aus der JP-100 77 838 A ist schon eine Steuerung bekannt, mit der der Öffnungs- bzw. Schließwinkel einer Lüfterklappe für den Kühler in Abhängigkeit von der Motortemperatur gesteuert wird. Dabei erfaßt ein Temperatursensor die Kühlwassertemperatur des Motors und ein erster Rechner berechnet den zeitabhängigen Verlauf der Temperaturänderung. Daraus bestimmt ein zweiter Rechner den einzustellenden Öffnungswinkel für die Lüfterklappe.

Aus der WO 890 44 19 A ist ein Kühlsystem für den Motor eines Kraftfahrzeugs bekannt, bei der neben der mechanisch angetriebenen Kühlmittelpumpe eine elektrisch betriebene Kühlmittelpumpe in Abhängigkeit von den Betriebsparametern einschaltbar ist. Ein Wärmetauscher kann mittels einer entsprechenden Lüfterklappe in seiner Kapazität so gesteuert werden, daß die Kühlleistung bei steigender Belastung und hoher Drehzahl ansteigen kann.

Bei den bekannten Kühlsystemen steht jedoch das Problem dass die gewünschte Steuerung der Kühlleistung von der Funktionssicherheit der Verschließeinheit, d. h. insbesondere der Lüfterklappe abhängt. Ist die Lüftungsklappe verklemmt, was beispielsweise im Winter durch Einfrieren, Eis- und Schneebelag erfolgen kann, dann ist nicht sicher gestellt, dass sie ihren vorgesehenen Öffnungswinkel erreicht. Das kann im Extremfall zu Motorüberhitzungen und damit zu einem Motorschaden führen.

Aus der DE 44 264 94 A1 ist eine neue Einrichtung zur Überwachung des Kühlsystems bei einer Brennkraftmaschine bekannt, bei der die Kühlertemperatur gemessen wird und in einer Auswerteinrichtung ausgehend von der Temperatur sowie insbesondere vom Temperaturverlauf, das Auftreten einer Fehlfunktion erkannt wird. Es sind dabei verschiedene Auswertemöglichkeiten angegeben, um die Temperaturänderungen abhängig von bekannten Bedingungen auszuwerten. Erkannte Fehlfunktionen des Kühlsystems werden angezeigt und/oder in einem nicht flüchtigen Speicher abgelegt und stehen so beispielsweise beim nächsten Werkstattbesuch zur Diagnose bereit. Insbesondere wird bei der Einrichtung zur Überwachung des Kühlsystems bei einer Brennkraftmaschine nach der DE 44 264 94 A1 ein Temperatursensor verwendet, der ein für das Kühlsystem charakteristisches Temperatursignal erzeugt. Eine Auswerteeinrichtung wertet den Verlauf des Temperatursignals aus und vergleicht erkannte Temperaturänderungen pro Zeiteinheit mit plausiblen Werten.

### Vorteile der Erfindung

Das erfindungsgemäße Kühlsystem eines Fahrzeuges mit einer Verschließeinheit für den Kühlluftstrom mit den kennzeichnenden Merkmalen des Hauptanspruchs hat dem gegenüber den Vorteil, dass eine Fehlstellung der Verschließeinheit anhand des Temperaturverlaufs erkannt wird. Besonders vorteilhaft ist dabei, dass kein zusätzlicher Sensor zur Erfassung des Öffnungswinkels der Verschließeinheit erforderlich ist. Dadurch werden Kosten gespart.

Wird eine Fehlstellung der Verschließeinheit vermutet, dann kann zur Stützung dieser These durch eine gezielte Verstellung des Öffnungswinkels der Verschließeinheit und Kontrolle des entsprechenden Temperaturverlaufs emeut geprüft werden, ob die vermutete Ursache in der Verstellung des Öffnungswinkels der Verschließeinheit lag.

Durch die in den abhängigen Ansprüchen aufgeführten Maßnahmen sind vorteilhafte Weiterbildungen und Verbesserungen des im Hauptanspruch angegebenen Kühlsystems möglich.

Besonders vorteilhaft ist, dass ein Toleranzband für den Verlauf der Modelltemperatur vorgesehen ist, sodass dann durch einen einfachen Vergleich mit der Ist-Temperatur zunächst eine Temperaturdifferenz festgestellt wird und die Ursache gesucht werden kann. Ist beispielsweise die Verschließeinheit geöffnet, obwohl die Motortemperatur zu gering ist, dann lässt sich daraus schließen, dass der Öffnungswinkel für die Verschließeinheit zu groß ist. Im anderen Fall, wenn die Motortemperatur zu hoch ist, kann angenommen werden, dass die Verschließeinheit geschlossen ist, sodass der Kühlluftstrom zu klein ist.

In vorteilhafter Weise kann die Kontrolle des entsprechenden Temperaturverlaufs bei Verstellung des Öffnungswinkels der Versschließeinheit mlt einem zweiten Toleranzband erfolgen, für das ein entsprechender Modellverlauf abgespeichert ist, sodass durch eine einfache Plausibilltätsprüfung die vermutete Fehlstellung überprüft werden kann.

Der Modellverlauf für die Kühlwassertemperatur wird vorteilhaft für eine bestimmten Fahrzeug- oder Motortyp empirisch ermittelt, sodass dieses Modell eine praxisgerechte Stützung findet.

Günstig ist es weiterhin, den Moclallverlauf mit seinen Parametern In einem nicht flüchtigen Speicher abzulegen, sodass sie auch nach einem Spannungsabfall verfügbar sind.

Es hat sich weiterhin als günstig erwiesen, zur Steuerung eine Verschließeinheit zu wählen, die beispielsweise aus einer Drehklappe oder einer Jalousie gefertigt ist. Diese Teile sind einfach herstellbar, beispielsweise mit kleinen Elektromotoren leicht steuerbar.

### Zeichnung

Ein Ausführungsbeisplel der Erfindung ist in der Zeichnung dargestellt und in der nachfolgenden Beschreibung näher erläutert.

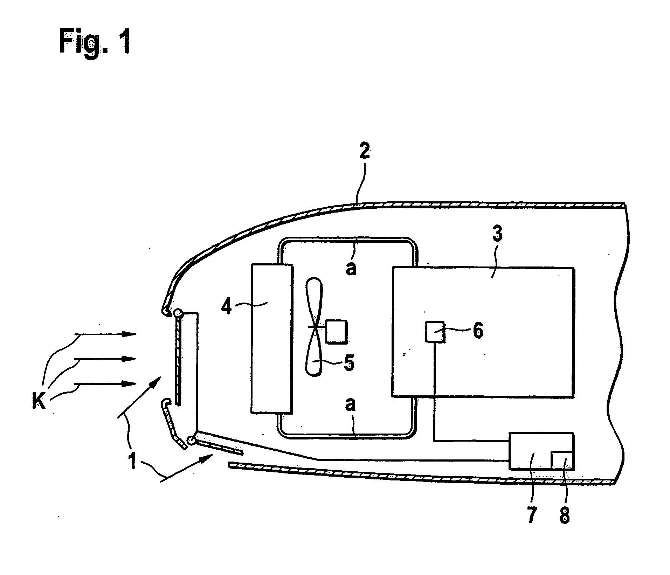

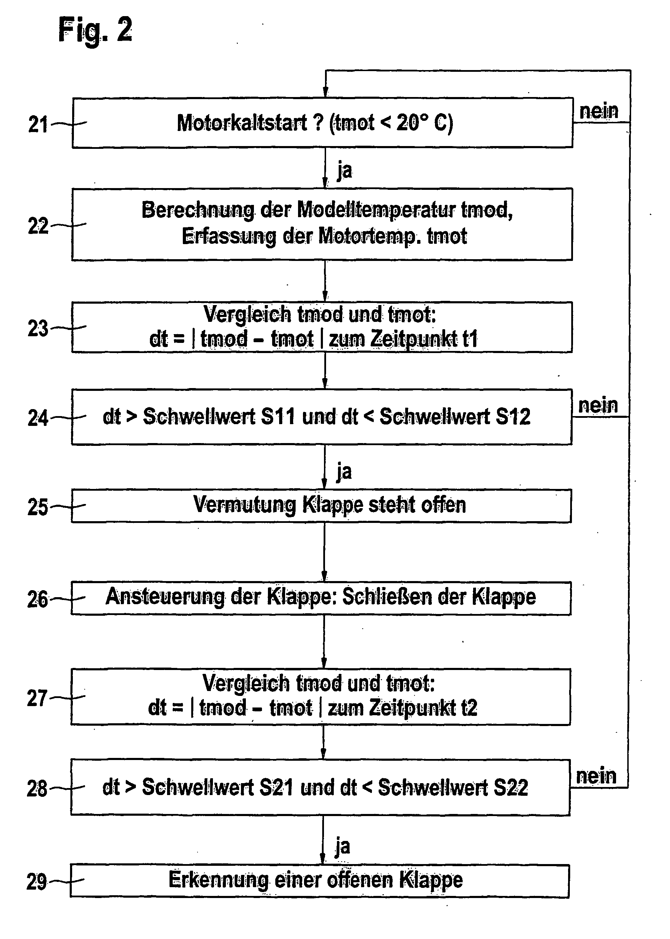

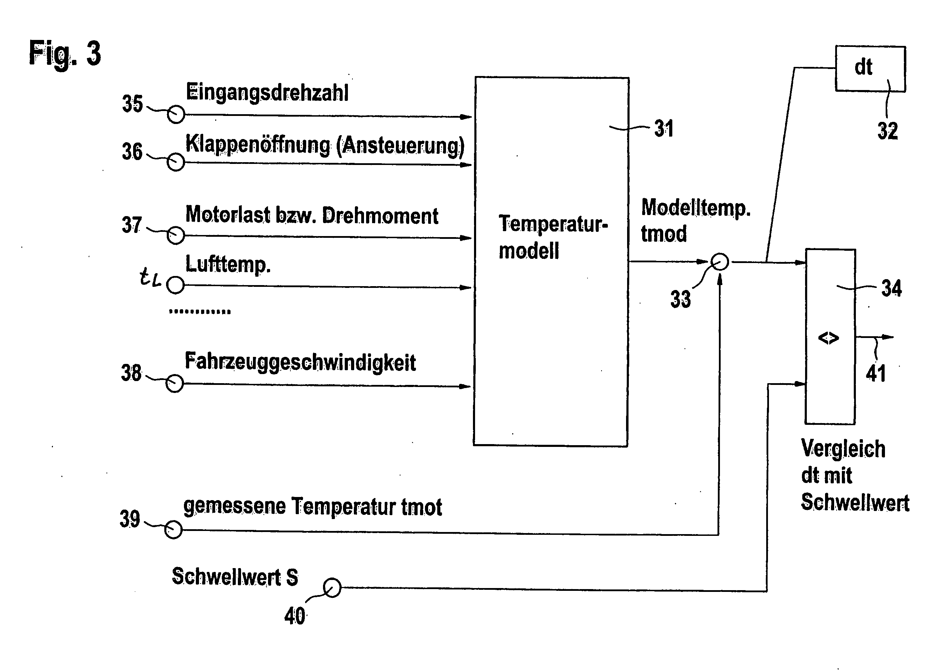

Figur 1 zeigt in schematischer Darstellung eine Verschließeinheit für einen Motorraum, Figur 2 zeigt ein Flußdiagramm und Figur 3 zeigt ein Blockschaltbild.

### Beschreibung des Ausführungsbeispiels

In Figur 1 ist schematisch ein Motorraum 2 dargestellt, der im Wesentlichen vollständig gekapselt ist und in Fahrtrichtung Öffnungen für den Kühlluftstrom K aufweist. Die Öffnungen sind mit geeigneten Verschließeinheiten 1, beispielsweise Klappen oder Jalousien ausgebildet. Im Motorraum 2 befindet sich wenigstens ein Kühler 4 mit einem entsprechend angeordnetem Lüfter 5, der den Kühlluftstrom K durch den Kühler 4 ansaugt und somit die gespeicherte Wärme des Kühlers 4 abführt. Der aufgewärmte Luftstrom wird über nicht dargestellte Öffnungen entweder ins Freie geführt oder gegebenenfalls zur Aufheizung des Passagier-Innenraumes des Kraftfahrzeugs verwendet. Des weiteren ist ein Motor 3 als Verbrennungsmotor angeordnet, der wenigstens einen Sensor 6 zur Temperaturmessung des Kühlwassers aufweist. Der Motor 3 ist über geeignete Kühlschläuche a mit dem Kühler 4 verbunden. Die erforderlichen Ventile, Pumpen etc. wurden aus Übersichtlichkeitsgründen weggelassen.

Weiterhin ist im Motorraum 2 eine Steuerung 7 angeordnet, die einen nichtflüchtigen Speicher 8 aufweist. Die Steuerung 7 ist über Kabel mit dem Sensor 6 verbunden. Des weiteren besteht eine Steuerverbindung für nicht dargestellte Steuermotoren der Verschließeinheiten 1. Die Verschließeinheiten sind so angeordnet, daß sie in Abhängigkeit von der Motortemperatur bzw. der Kühlwassertemperatur durch die Steuerung 8 geöffnet oder geschlossen werden oder Zwischenstellungen einnehmen können, so daß der Kühlluftstrom K zur Kühlung des Kühlers 4 und des Motors 3 geregelt werden kann. So kann beispielsweise bei einem Kaltstart der Kühlluftstrom K unterbunden werden, um einen schnelleren Warmlauf des Motors zu erreichen. Durch den schnelleren Warmlauf des Motors ergeben sich geringere schädliche Abgase sowie ein schnelles Erreichen des optimalen Betriebspunktes des Motors.

Zur Durchführung eines Thermomanagements ist es erforderlich, daß die Verschließeinheit 1 unter allen Betriebsbedingungen zuverlässig arbeitet. Insbesondere im Winter mit tiefen Temperaturen und bei Eis und Schnee ist es erforderlich, daß die Verschließeinheit 1 stets den gewünschten Öffnungswinkel aufweist. Bei einer hohen Motorbelastung mit großer Wärmeentwicklung könnte eine geschlossene Verschließeinheit 1 dazu führen, daß der Motor überhitzt wird und Schaden nimmt. Andererseits kann eine ständig geöffnete Klappe dazu führen, daß der Motor seine optimale Betriebstemperatur nicht erreicht und somit überdurchschnittlich hohe Schadstoffe im Abgas produziert. Natürlich würde in diesem Fall auch die Heizleistung für den Fahrzeug-Innenraum nicht ausreichen. Zur Überwachung der Funktionsfähigkeit der Verschließeinheit 1 könnten auch gesetzliche Regelungen vorgesehen werden.

Die Überwachung des Öffnungswinkels der Verschließeinheit 1 erfolgt daher erfindungsgemäß mit einer Regelung, wie sie zur Figur 2 näher erläutert wird. Dabei wird davon ausgegangen, daß in dem Speicher 8 ein Modellverlauf für die Kühlwassertemperatur abgespeichert ist, wobei der Modellverlauf den Temperaturanstieg sowohl bei einer geschlossenen als auch einer geöffneten Verschließeinheit 1 berücksichtigt. Die Erfindung geht nun davon aus, daß bei einem vermuteten Defekt der Verschließeinheit 1 der tatsächliche Temperaturverlauf für die Kühlwassertemperatur nicht mit dem gespeicherten Modellverlauf übereinstimmt. Um diese Vermutung zu überprüfen, wird die Verschließeinheit 1 gezielt angesteuert, so daß sich daraus aufgrund des geänderten Kühlluftstroms K auch ein geänderter Temperaturverlauf ergeben muß. Dabei werden natürliche die Fahrbedingungen und die Motorbelastung bzw.- Wärmeerzeugung berücksichtigt.

Gemäß des Flußdiagramms der Figur 2 wird nun zunächst in Position 21 mit Hilfe des Sensors 6 geprüft, ob ein Motorkaltstart vorliegt. Ist die Temperatur des Motors z. B. kleiner 20°C, dann wird davon ausgegangen, daß ein Kaltstart vorliegt. In diesem Fall wird in Position 22 die Modelltemperatur tmod dem Speicher 8 entnommen und mit der gemessenen Motortemperatur tmot verglichen.

Im Falle des Kaltstarts wird nun in Position 23 zum Zeitpunkt t1 die betragsmäßige Differenztemperatur dt zwischen der Modelltemperatur tmod und der Motortemperatur tmot gebildet. Liegt die Temperaturdifferenz dt zwischen den beiden vorgegebenen Schwellwerten S11 und S12, die ein entsprechendes Temperaturtoleranzband darstellen, dann ist der Wert in Ordnung (Position 24). In diesem Fall kann davon ausgegangen werden, daß die Verschließeinheit 1 ordnungsgemäß arbeitet. In diesem Fall springt das Programm auf Position 21 zurück und beginnt erneut mit der Temperaturmessung. Liegt dagegen die Temperaturdifferenz dt außerhalb der beiden Schwellwerte S11 und S12, dann wird davon ausgegangen, daß die Verschließeinheit 1 offensteht (Position 25). In diesem Fall wird gemäß Position 26 die Klappe von der Steuerung 7 angesteuert und beispielsweise um einen bestimmten Winkel verstellt oder ganz geschlossen. In Position 27 wird wieder die betragsmäßige Temperaturdifferenz dt zwischen der Modelltemperatur tmod und der Motortemperatur tmot zum Zeitpunkt t2 gebildet. Liegt nun gemäß Position 28 die Temperaturdifferenz dt zwischen den zweiten Schwellwerten S21 und S22, dann wird davon ausgegangen, daß die Verschließeinheit 1 ordnungsgemäß arbeitet und kein Fehler vorliegt. In diesem Fall springt das Programm wieder auf Position 21 zurück.

Im anderen Fall, wenn die Temperaturdifferenz dt außerhalb der beiden Schwellen S21 und S22 liegt, dann wird davon ausgegangen, daß sich die Verschließeinheit 1 nicht betätigen läßt. In diesem Fall erkennt das Programm eine offene Klappe als Fehlstellung (Position 29). Dieser Zustand kann nun beispielsweise auf einer Anzeige am Armaturenbrett ausgegeben werden und so den Fahrer darauf hinweisen, daß das Kühlsystem nicht ordnungsgemäß arbeitet. Alternativ wird dieser Fehler in einem Fehlerspeicher abgelegt, so daß er im Servicefall in der Werkstatt diagnostiziert werden kann.

Figur 3 zeigt ein Blockschaltbild zur Bildung der Modelltemperatur tmod, der Motortemperatur tmot und der Temperaturdifferenz dt. Für das Kraftfahrzeug wird ein Temperaturmodell 31 gebildet, in dem alle variablen Motor-und Fahrparameter berücksichtigt werden. So werden beispielsweise in entsprechende Eingänge 35 bis 38 die Eingangsdrehzahl des Motors, der Ansteuerwert für die Klappenöffnung, die Motorlast bzw. das Motordrehmoment, die Lufttemperatur t_{L} und/oder die Fahrzeuggeschwindigkeit eingegeben. Diese Daten liegen mittels entsprechender Sensoren bereits vor und können somit für die Bildung des Temperaturmodells 31 berücksichtigt werden. Ausgangsseitig steht dann die Modelltemperatur tmod zur Verfügung. Diese Modelltemperatur tmod wird auf einen Subtrahierer 33 gegeben, der die gemessene Temperatur tmot subtrahiert, die beispielsweise über eine Klemme 39 vom Sensor 6 geliefert wurde. Ausgangsseitig liefert der Subtrahierer 33 die Temperaturdifferenz dt (Position 32). Diese Temperaturdifferenz dt wird auf einen Vergleicher 34 geführt, dem die Schwellwerte S11, S12, S21 und S22 über den Eingang 40 entsprechend zugeführt werden. Der Vergleicher 34 vergleicht die Temperaturdifferenz dt mit den Toleranzbändern der Schwellwerte S und gibt ein entsprechendes Ausgangssignal an der Klemme 41 aus. Dieses Ausgangssignal steht zur weiteren Verarbeitung zur Verfügung.

Entsprechend kann eine geschlossene, klemmende Klappe diagnostiziert werden. Hierbei kann der Temperaturverlauf nach dem Ansteuern bzw. Öffnen der Klappe als Maßstab dienen. Steigt die Motortemperatur tmot nach dem Ansteuern der Klappe stärker als die Modelltemperatur tmod (dt>S31 und dt<S32 zum Zeitpunkt t3), so wird eine geschlossene, klemmende Klappe vermutet. Ist dies auch nach nochmaligem Ansteuern der Klappe der Fall, so kann davon ausgegangen werden, daß die Klappe tatsächlich geschlossen ist und klemmt.

Die Ansteuerung der Klappe mit anschließendem Vergleich der Temperaturen tmot und tmod kann auch rein zu Prüfzwecken (ohne die vorhergehende Vermutung eines Defekts) stattfinden. Dies geschieht dann vorteilhaft im quasistationären Motorbetrieb, beispeilsweise im Leerlauf.

## Patentansprüche

1. Kühlsystem eines Kraftfahrzeugs mit einer Verschließeinheit (1) für den Kühlluftstrom (K) zur Optimierung der Betriebsparameter des Verbrennungsmotors (3), mit einem Sensor (6) zur Erfassung der Motortemperatur (tmot) und mit einer Steuerung (7) zur Betätigung der Verschließeinheit (1) in Abhängigkeit von der Motortemperatur (tmot), wobei die Steuerung (7) ausgebildet ist, den zeitlichen Temperaturverlauf für das Kühlwasser zu erfassen und mit einem vorgegebenen Modellverlauf zu vergleichen, **dadurch gekennzeichnet, dass** die Steuerung (7) aus der zeitlichen Änderung der Temperaturdifferenz (dt) zwischen dem Modellverlauf (tmod) und dem Kühlwasser-Temperaturverlauf (tmot) eine mögliche Fehlstellung der Verschließeinheit (1) erkennt, und die Steuerung (7) bei Erkennung dieser Fehlstellung, die Verschließeinheit (1) um einen vorgegebenen Winkel ansteuert und nachfolgend für eine vorgegebene Zeitspannung den Temperaturverlauf mit dem Modellverlauf vergleicht.

2. Kühlsystem nach Anspruch 1, **dadurch gekennzeichnet, dass** die Steuerung (7) bei einem Verlauf der zeitlichen Temperaturdifferenz (dt) der Kühlwassertemperatur (tmot) zur Modelltemperatur (tmod) außerhalb eines vorgegebenen Toleranzbandes (S11, S12) eine Fehlstellung der Verschließeinheit (1) erkennt

3. Kühlsystem nach Anspruch 2, **dadurch gekennzeichnet, dass** der entstehende Temperaturverlauf mit einem zweiten Toleranzband (S21, S22) verglichen und auf Plausibilität geprüft wird.

4. Kühlsystem nach einem der vorhergehenden Ansprüche, **dadurch gekennzeichnet. dass** der Modellverlauf für die Kühlwassertemperatur für einen Fahrzeug-/Motortyp empirisch erfaßbar ist.

5. Kühlsystem nach Anspruch 4, **dadurch gekennzeichnet, dass** der Modellverlauf in einem nichtflüchtigen Speicher (8) der Steuerung (7) abgelegt ist oder aus nicht flüchtig abgelegten Parametern berechnet wird.

6. Kühlsystem nach einem der vorhergehenden Ansprüche, **dadurch gekennzeichnet, dass** die Verschließeinheit (1) eine Drehklappe aufweist.

7. Kühlsystem nach einem der vorhergehenden Ansprüche, **dadurch gekennzeichnet, dass** die Verschließeinheit (1) eine Jalousie aufweist.

8. Kühlsystem nach einem der vorhergehenden Ansprüche, **dadurch gekennzeichnet, dass** die Verschließeinheit (1) während eines günstigen, quasistationären Motorbetriebs, vorzugsweise im Leerlauf bei stehendem Fahrzeug angesteuert wird.

## Claims

1. Cooling system for a motor vehicle having a closing unit (1) for the cooling air flow (K) for optimizing the operating parameters of the internal combustion engine (3), having a sensor (6) for measuring the engine temperature (tmot) and having a controller (7) for actuating the closing unit (1) as a function of the engine temperature (tmot), the controller (7) being designed to ascertain the time-based temperature profile of the cooling water and to compare it to a predefined model profile, **characterized in that** the controller (7) detects a possible maladjustment of the closing unit (1) from the time-based change in the temperature difference (dt) between the model profile (tmod) and the cooling water temperature profile (tmot), and when said maladjustment is detected, the controller (7) actuates the closing unit (1) through a predefined angle and subsequently compares the temperature profile with the model profile for a predefined period of time.

2. Cooling system according to Claim 1, **characterized in that** the controller (7) detects a maladjustment of the closing unit (1) when the time-based temperature difference (dt) of the cooling water temperature (tmot) relative to the model temperature (tmod) runs outside a predefined tolerance band (S11, S12).

3. Cooling system according to Claim 2, **characterized in that** the resulting temperature profile is compared with a second tolerance band (S21, S22) and is checked for plausibility.

4. Cooling system according to one of the preceding claims, **characterized in that** the model profile for the cooling water temperature can be ascertained empirically for a vehicle/engine type.

5. Cooling system according to Claim 4, **characterized in that** the model profile is stored in a non-volatile memory (8) of the controller (7) or is calculated from parameters which are stored in a non-volatile fashion.

6. Cooling system according to one of the preceding claims, **characterized in that** the closing unit (1) has a rotary flap.

7. Cooling system according to one of the preceding claims, **characterized in that** the closing unit (1) has a louvre.

8. Cooling system according to one of the preceding claims, **characterized in that** the closing unit (1) is actuated during a favourable, quasi-steady engine operating mode, preferably at idle when the vehicle is stationary.

## Revendications

1. Système de refroidissement d'un véhicule motorisé comportant une unité de fermeture (1) pour le flux d'air de refroidissement (K) afin d'optimiser les paramètres de fonctionnement du moteur à combustion (3), un capteur (6) pour détecter la température moteur (tmot) et une commande (7) pour actionner l'unité de fermeture (1) en fonction de la température moteur (tmot), la commande (7) étant conçue pour détecter la courbe de température dans le temps de l'eau de refroidissement et pour la comparer à une courbe modélisée prédéterminée,
**caractérisé en ce qu'**
à partir de la variation temporelle de la différence de température (dt) entre la courbe modélisée (tmod) et la courbe de température de l'eau de refroidissement (tmot), la commande (7) reconnaît un défaut de réglage possible de l'unité de fermeture (1), et la commande (7) excite l'unité de fermeture (1) à un angle prédéterminé si un tel défaut est constaté, et compare ensuite la courbe de température et la courbe modélisée pour un laps de temps prédéterminé.

2. Système de refroidissement selon la revendication 1,
**caractérisé en ce que**
la commande (7) reconnaît un défaut de réglage de l'unité de fermeture (1) si une courbe de la différence (dt) dans le temps de la température de l'eau de refroidissement (tmot) par rapport à la température modélisée (tmod) se trouve en dehors d'une plage de tolérance prédéterminée (S11,S12).

3. Système de refroidissement selon la revendication 2,
**caractérisé en ce que**
la courbe de température générée est comparée à une deuxième plage de tolérance (S21, S22) et subit un test de plausibilité.

4. Système de refroidissement selon l'une quelconque des revendications précédentes,
**caractérisé en ce que**
la courbe modélisée de température d'eau de refroidissement est saisie de manière empirique pour la température de l'eau de refroidissement pour un type de moteur / véhicule.

5. Système de refroidissement selon la revendication 4,
**caractérisé en ce que**
la courbe modélisée est enregistrée dans une mémoire (8) non volatile de la commande (7) ou est calculée à partir de paramètres enregistrés de manière non volatile.

6. Système de refroidissement selon l'une quelconque des revendications précédentes,
**caractérisé en ce que**
l'unité de fermeture (1) présente une vanne rotative.

7. Système de refroidissement selon l'une quelconque des revendications précédentes,
**caractérisé en ce que**
l'unité de fermeture (1) présente un store.

8. Système de refroidissement selon l'une quelconque des revendications précédentes,
**caractérisé en ce que**
l'unité de fermeture (1) est excitée pendant un fonctionnement quasi-stationnaire avantageux du moteur, de préférence en marche à vide le véhicule à l'arrêt.
